(19) Europäisches Patentamt
European Patent Office
Office européen des brevets

(11) **EP 3 018 856 A1**

(12) **EUROPEAN PATENT APPLICATION**

(43) Date of publication:
**11.05.2016 Bulletin 2016/19**

(51) Int Cl.:
*H04L 5/00* (2006.01)      *H04W 72/04* (2009.01)

(21) Application number: **14306793.2**

(22) Date of filing: **10.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Gacanin, Haris**
  **2018 Antwerpen (BE)**
• **Elwekeil, Mohamed Elsayed**
  **2018 Antwerpen (BE)**

(74) Representative: **Land, Addick Adrianus Gosling**
**Arnold & Siedsma**
**Bezuidenhoutseweg 57**
**2594 AC Den Haag (NL)**

(54) **Method for selecting a wireless communication channel**

(57)    Method for selecting a communication channel from a plurality of communication channels for wireless communication between a wireless access point and at least one wireless device, comprising the steps of:
(i) measuring the strength of signals received at the wireless access point and the at least one wireless device on each of the plurality of communication channels;
(ii) calculating the power sensed on each of the plurality of wireless communication channels from the signal strengths sensed by the wireless access point and the at least one wireless device on each of the plurality of communication channels;
(iii) calculating the interference on each of the plurality of communication channels from the power sensed on each of the plurality of wireless communication channels; and
(iv) assigning the communication channel with least total interference to the wireless access point.

Wireless devices

Scan the spectrum — S101

Prepare RSSI reports — S102

Send reports to the MC — S103

Management center (MC)

Collect RSSIs and QoS requirements from devices
S201

Reformulate the received reports — S301

Weight the RSSIs according to the QoS requirements — S302

Calculate the interfering power on each channel — S303

Select the channel with lowest interference — S304

FIG. 1

**Description**

The present invention relates to the field of wireless networks. More specifically, it relates to a method and system for selecting a communication channel for wireless communication between a wireless access point and at least one wireless device.

Wireless network equipment, comprising user equipment devices (such as laptops, tablets and mobile phones) and wireless access points (e.g routers), communicate over specific channels. Similar to TV channels, each wireless communication channel is assigned a number that represents a specific communication frequency. As part of the well-known IEEE 802.11 communication protocol, which defines sets of legally allowed wireless local area network channels, wireless devices can set and adjust their channel numbers. Various frequency bands are known, of which the most common ones are the 2.4 GHz and 5 GHz band. Each band is divided into sub-ranges, i.e. channels, with a certain bandwidth. The 2.4 GHz band is divided into 14 channels spaced 5 MHz apart. Adjacent channels overlap and may interfere with each other. To avoid interference, the IEEE protocol requires 16.25 to 22 MHz of channel separation and therefore leaving 4 channels clear between used channels is recommended. In case that network spaces covered by two or more access points overlap, interference could be minimized by signal attenuation or separation. Software on computers and routers keep track of wireless communication channel settings being used at any given time. Under normal conditions, these settings are satisfactory for the users of the wireless network. In certain situations, however, users may need to change the channel of operation to communication.

An example of such a situation is when a wireless access point is unplannedly deployed in close proximity to an existing wireless network. If the wireless access point of the existing wireless network and that of the newly deployed network operate on the same channel, there might be no mutual interference between both access points, but it could be that interference is sensed by one of the wireless devices in the existing wireless network. Consequently, this device will defer its transmission and the network throughput will undesirably be reduced. Due to the limited number of channels, a robust channel selection in unplanned access point deployments is therefore imperative to safeguard the operation integrity of a wireless network. It helps mitigating the interference from neighboring networks and, consequently, improves the throughput.

The prior art discloses a variety of methods to deal with channel selection in case the coverage areas of neighboring wireless network overlap. Algorithms are known that implement interference minimization techniques for neighbouring wireless networks such as power control, rate adaptation, load balancing and subsequent channel assignment. Also, a network performance optimization scheme is known for dense wireless networks.

The methods, however, are not applicable to neighboring networks that are operating under supervision of different operators.

It is an object of the present invention to improve the reliability of wireless networks that are operating under the supervision of different network operators.

To this end, according to the invention, there is provided a method for selecting a communication channel from a plurality of communication channels for wireless communication between a wireless access point and at least one wireless device, comprising the steps of:

(i) measuring the strength of signals received at the wireless access point and the at least one wireless device on each of the plurality of communication channels;
(ii) calculating the power sensed on each of the plurality of wireless communication channels from the signal strengths sensed by the wireless access point and the at least one wireless device on each of the plurality of communication channels;
(iii) calculating the interference on each of the plurality of communication channels from the power sensed on each of the plurality of wireless communication channels; and
(iv) assigning the communication channel with least total interference to the wireless access point.

By combining for each channel the signal strength sensed by the access point with those sensed by the wireless devices, possible interference can be traced across the entire network space covered by an access point. Consequently, the method enables access points that are neither part of a common management center nor able to collaborate, such as access points that are operating under supervision of different operators like residential wireless networks, hotspots and adjacent-office wireless networks, to autonomously determine possible interference problems and decide which of the available channels is best for operation.

According to a preferred embodiment of the invention, the step of measuring is repeated at regular time intervals by the wireless access point and the at least one wireless device. By automatically, repeatedly and regularly measuring the signal strengths on each channel, the method checks whether the channel used for communication is still the best for operation and therewith further improves the reliability of wireless networks that may suffer from proximate unplanned access point deployments.

According to another preferred embodiment, the step of measuring is triggered by a separate server. As a result, the invention can be implemented easily in current networks.

According to yet another preferred embodiment, the step of calculating the power comprises weighting each received signal strength by a parameter that represents the quality of service requirements of each respective wireless device. Considering the quality of service requirements for each device allows for more intelligent channel selection, typically in dense networks environments. It could be that relatively strong interference due to substantially overlapping neighboring network spaces is allowed if one of the networks only requires a low quality of service and thereby allows attenuating the communication signals. Based on a signal strength assessment alone, channel separation between the networks could unnecessarily have been maximized at the expense of the communication quality of a possible other neighboring network.

In a further preferred embodiment, the steps of calculating and assigning are carried out by the at least one wireless access point.

Alternatively, in another preferred embodiment, the steps of calculating and assigning are carried out by a management center, such as a Wi-Fi controller.

Preferably, the step of calculating the power comprises performing the following calculation:

$$\text{Total Power Sensed on Channel j} = \sum_{k=1}^{n} w_{k,j} * 10^{\left(\frac{\text{RSSI}_{k,j}}{10} - 3\right)} \text{ Watts}$$

where $w_{k,j}$ is the quality of service weighting factor associated with $\text{RSSI}_{k,j}$, $\text{RSSI}_{k,j}$ is the power in dBm of signal number k that was sensed on the channel j, and $n_j$ is the total number of sensed signals on channel j.

Preferably, the step of calculating the interference comprises performing the following calculation:

$$\text{Total Interference on Channel i} = \sum_{j=1}^{11} \beta_{ij} * \text{Total Power Sensed on Channel j}$$

where $\beta_{ij}$ is the overlapping channel interference factor between channels i and j and is given by

$$\beta_{ij} = \begin{cases} 1 - \left(\frac{\text{abs}(i-j)}{5}\right) & \text{if } \text{abs}(i-j) \leq 5 \\ 0 & \text{otherwise} \end{cases}$$

Furthermore, the invention relates to a system for selecting a communication channel from a plurality of communication channels for wireless communication between a wireless access point and at least one wireless device, comprising:

(i) circuitry for measuring the strength of signals received at the wireless access point and the at least one wireless device on each of the plurality of communication channels;
(ii) a processor for calculating the power sensed on each of the plurality of wireless communication channels from the signal strengths sensed by the wireless access point and the at least one wireless device on each of the plurality of communication channels, calculating the interference on each of the plurality of communication channels from the power sensed on each of the plurality of wireless communication channels, and assigning the communication channel with least total interference to the wireless access point.

The system combines for each channel the signal strength sensed by the access point with those sensed by the wireless devices, and therefore possible interference can be traced across the entire network space covered by an access point.

As a result, the system enables access points that are neither part of a common management center nor able to collaborate, such as access points that are operating under supervision of different operators like residential wireless networks, hotspots and adjacent-office wireless networks, to autonomously determine possible interference problems and decide which of the available channels is best for operation.

According to a preferred embodiment, the processor further comprises circuitry for weighting each received signal strength by a parameter that represents the quality of service requirements of each respective wireless device. Considering the quality of service requirements for each device allows for more intelligent channel selection, typically in dense networks environments. It could be that relatively strong interference due to substantially overlapping neighboring network spaces is allowed if one of the networks only requires a low quality of service and thereby allows attenuating the communication signals. Based on a signal strength assessment alone, channel separation between the networks could unnecessarily have been maximized at the expense of the communication quality of a possible other neighboring network.

According to another preferred embodiment, the processor is part of the at least one wireless access point.

Alternatively, according to a preferred embodiment, the processor is part of a management center, such as a Wi-Fi controller.

According to preferred embodiment, the processor calculates the power sensed on each of the plurality of wireless communication channels by performing the following calculation:

$$\text{Total Power Sensed on Channel j} = \sum_{k=1}^{n} w_{k,j} * 10^{\left(\frac{\text{RSSI}_{k,j}}{10} - 3\right)} \text{ Watts}$$

where $w_{k,j}$ is the quality of service weighting factor associated with $\text{RSSI}_{k,j}$, $\text{RSSI}_{k,j}$ is the power in dBm of signal number k that was sensed on the channel j, and $n_j$ is the total number of sensed signals on channel j.

According to preferred embodiment, the processor calculates the interference on each of the plurality of communication channels by performing the following calculation:

$$\text{Total Interference on Channel i} = \sum_{j=1}^{11} \beta_{ij} * \text{Total Power Sensed on Channel j}$$

where $\beta_{ij}$ is the overlapping channel interference factor between channels i and j and is given by

$$\beta_{ij} = \begin{cases} 1 - \left(\dfrac{\text{abs}(i-j)}{5}\right) & \text{if } \text{abs}(i-j) \leq 5 \\ 0 & \text{otherwise} \end{cases}$$

Finally, the invention relates to a computer program product comprising computer-executable instructions for performing, when the program is run on a computer, any one of the preferred embodiment of the method provided by the invention.

Further devices, features and advantages of the present invention are clarified in the following description of a preferred embodiment of the method and system according to the invention, and are not intended to limit the scope of the invention in any way, wherein:

Figure 1 is a flow chart showing the steps of a method for selecting a wireless communication channel for communication between wireless devices in a wireless network.
Figure 2 illustrates the step of scanning the Wi-Fi spectrum and measuring the wireless signal strengths at each wireless communication channel by each wireless device.
Figure 3 shows a report of the signal strengths measured by each wireless device at each wireless communication channel.

Figure 4 illustrates the step of sending the reports to a management center (MC).

Figure 5 shows the step of ordering and weighting the signal strengths received from all wireless devices according to the wireless communication channels of operation.

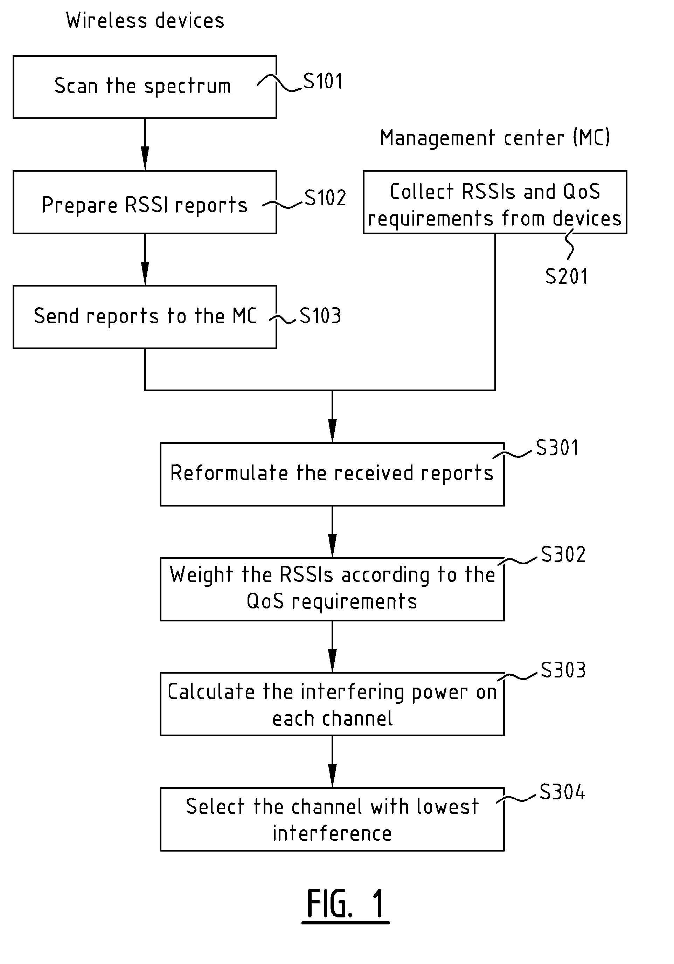

Figure 1 shows a flow chart, which describes the steps of each wireless device in a private network, comprising an access point and one ore more user equipment devices, and the management center (MC) in a method according to a preferred embodiment of the invention, wherein said method comprises selecting at least one wireless communication channel from a plurality of wireless communication channels for communication between at least one wireless access point and at least one other wireless device in a wireless network environment defined by said at least one wireless access point.

In the first stage, each wireless device, i.e. the wireless access point and each wireless user equipment device, scans (S101) the Wi-Fi spectrum and obtains the signal strength received at each wireless communication channel.

Secondly, each wireless device prepares (S102) a report on the signal strengths collected in stage 1. More specifically, each device registers the so called received signal strength indication (RSSI) values on each available wireless communication channel together with its quality of service (QoS) requirements.

In a further step, each wireless device sends (S103) its report about the signal strength per channel to a server, which can be a wireless access point or a so called management center (MC), also known as a WLAN controller.

In the case that the server is a management center (MC), the MC collects (S104) the RSSI values from all the wireless devices as well as their QoS requirements.

Subsequently, the management center reformulates (S301) the information it received from all the wireless devices according to the channels of operation. The values of the RSSIs can lie in the range from -90 dBm to 0 dBm. A device that needs a voice communication or real time video will be categorized as requiring a high quality of service, whereas a device used for browsing the internet can be categorized as requiring a low quality of service.

In a next step, each RSSI value obtained by each wireless device is weighted (S302) according to its required quality of service. A device that needs voice communication or real time video will be given a higher weight than a device for browsing e-mail. In this description, two quality-of-service levels are assumed: high and low. Consequently, only two weights are needed to distinguish them. Although only two levels are assumed, it will be clear that a plurality of QoS values can be used for weighting.

After weighting the RSSI values by the quality of service requirements, the total power sensed on each channel is calculated (S303).

Finally, the total interference on each wireless communication channel is calculated. After calculating the total interference on each channel, the MC selects the channel with least interference and will inform the wireless access point about this so that it will reconfigure itself to this channel. In this way, the network is working on the best channel based on the interference seen by all wireless user equipment devices and access points as well as the quality of service requirements of each device.

Note that steps S101, S102 and S103 can either be done automatically by the wireless devices or it can be triggered by the MC in order to collect (S201) the required information.

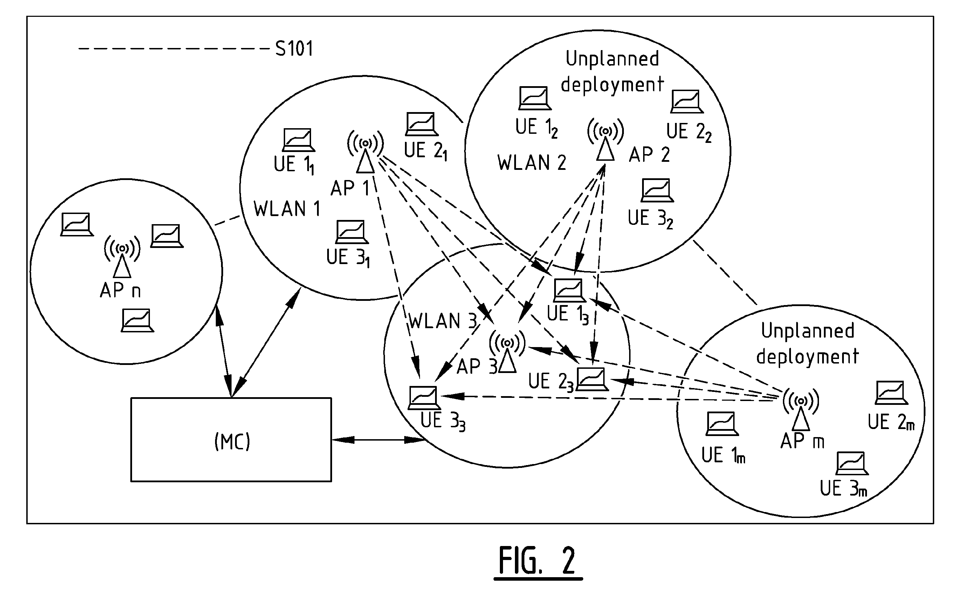

Figure 2 illustrates the step of scanning (S101) the Wi-Fi spectrum and measuring the wireless signal strengths received on each wireless communication channel by each wireless device in wireless network WLAN 3 in case of proximate unplanned deployments of access points AP2 and APm. In this example, access point AP3 and user devices $UE1_3$, $UE2_3$ and $UE3_3$ measure the strengths of signals transmitted on each of the available communication channels.

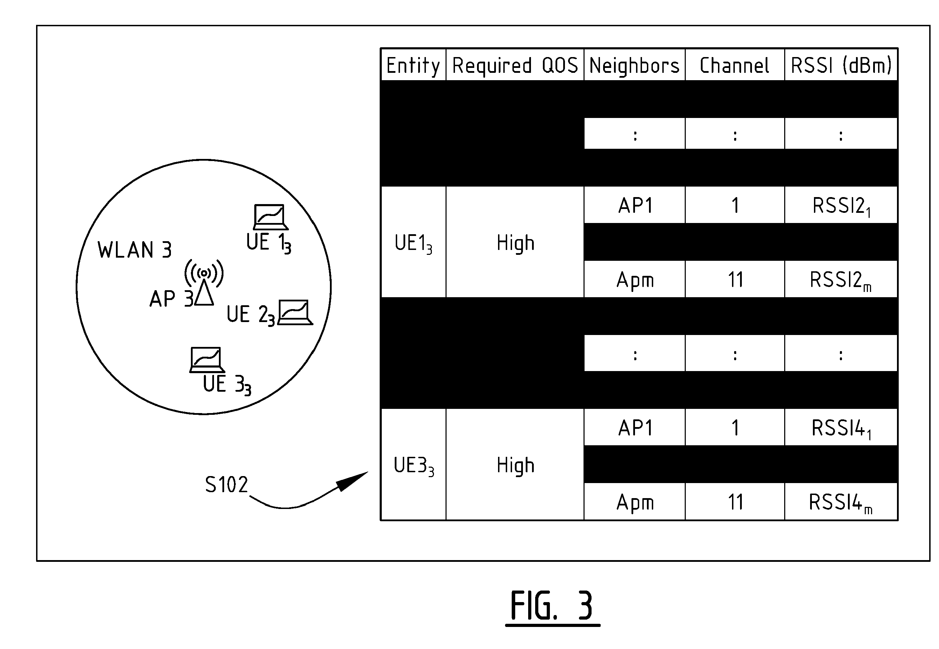

Figure 3 shows an example report of signal strengths received on wireless communication channels 1 to 11, by each wireless device in wireless network WLAN 3. It lists the received signal strength indicators RSSI $1_{1..m}$ to RSSI $4_{1..m}$, which represent the signal strengths received by each of the four wireless devices in WLAN 3, i.e. wireless access point AP3 and wireless user equipment devices $UE1_3$, $UE2_3$ and $UE3_3$.

Each device subsequently sends its report about neighboring networks to a server, which can be either one of the access points or a management center. In this example, we consider the latter scenario.

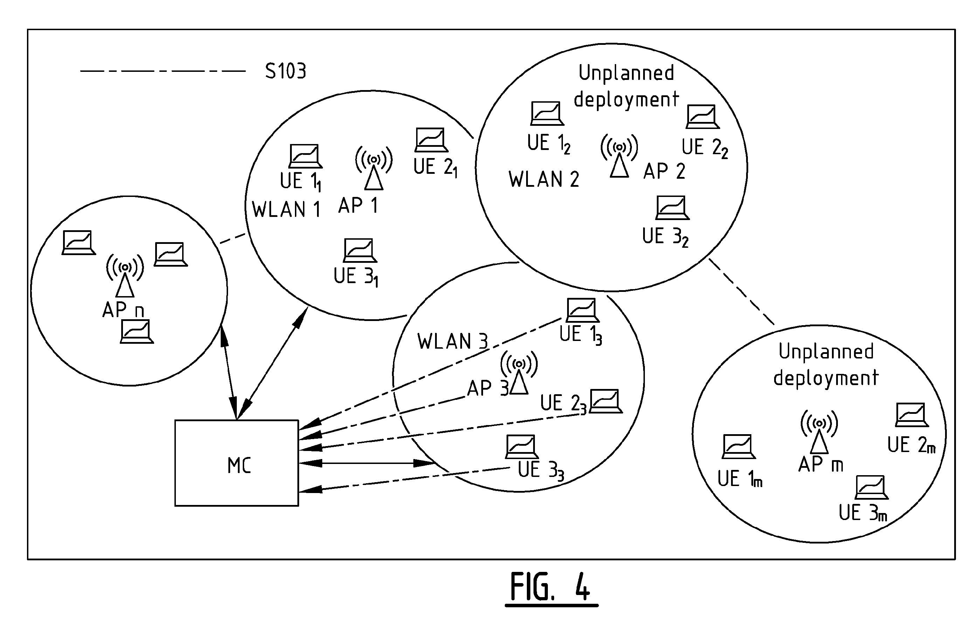

Figure 4 illustrates the step of sending (S103) the reports obtained by the access point AP 3 and each of the wireless user equipment devices $UE1_3$, $UE2_3$ and $UE3_3$ to a management center (MC).

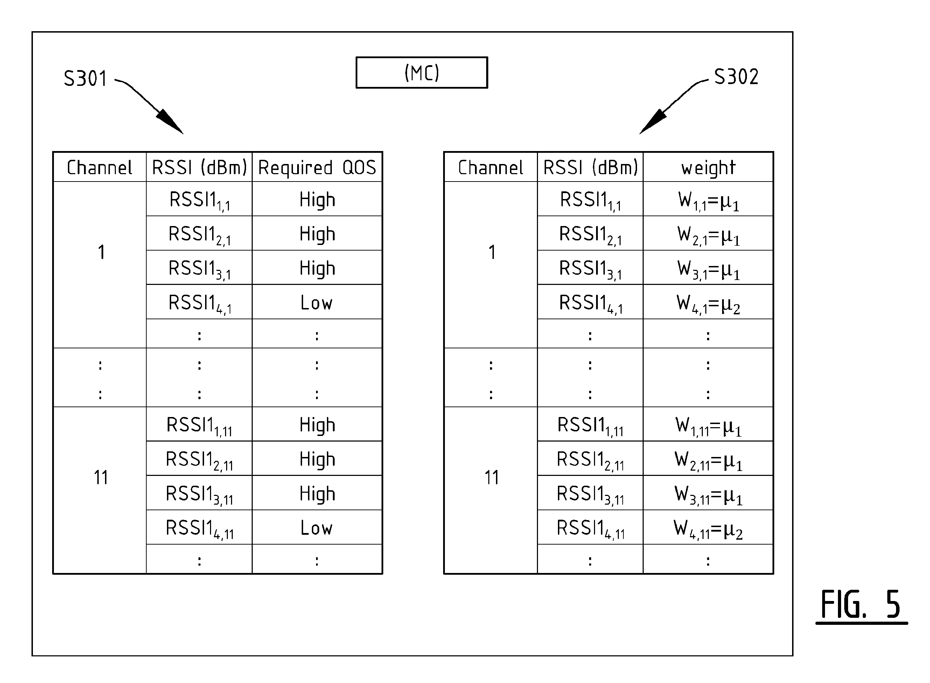

Subsequently, the MC selects the best channel of operation, based on the reports received. More specifically, this is done in several steps, as illustrated in Figure 5:

1. The management center reformulates the information it received from all the devices according to the channels of operation, as shown on the left-hand side of Figure 5. The values of the RSSIs lie in the range of -90 dBm up to 0 dBm. A device that needs voice communication or real time video will be categorized as it requires a high quality of service. Contrarily, a device for browsing the Internet can be categorized as requiring a low quality of service.

2. Weighting each RSSI parameter obtained from devices according to its required quality of service. An example of weight assignment is shown on the right-hand side of Figure 5. A device that needs voice communication or real time video should have a higher weight than a device for browsing e-mail. In the example of Figure 5, only two levels of quality of service are assumed: high and low. Consequently, only two weights are needed to distinguish them.

3. Subsequently, the total power sensed on channel j is calculated using the following equation:

$$\text{Total Power Sensed on Channel } j = \sum_{k=1}^{n} w_{k,j} * 10^{\left(\frac{\text{RSSI}_{k,j}}{10} - 3\right)} \text{ Watts}$$

where $w_{k,j}$ is the quality of service weighting factor associated with $\text{RSSI}_{k,j}$, $\text{RSSI}_{k,j}$ is the power in dBm of signal number k that was sensed on the channel j, and $n_j$ is the total number of sensed signals on channel j.

4. After calculating the total power on channel j, the total interference on channel i is calculated using the following formula:

$$\text{Total Interference on Channel } i = \sum_{j=1}^{11} \beta_{ij} * \text{Total Power Sensed on Channel } j$$

where $\beta_{ij}$ is the overlapping channel interference factor between channels i and j and is given by

$$\beta_{ij} = \begin{cases} 1 - \left(\dfrac{\text{abs}(i-j)}{5}\right) & \text{f } \text{abs}(i-j) \leq 5 \\ 0 & \text{otherwise} \end{cases}$$

5. Finally, after calculating the total interference on channels 1 to 11, the management center will pick the channel with the least total interference and will inform the access point AP3 about this so that it will configure itself to this channel. As a result, the network WLAN 3 is working on the best channel taking into account the interference seen by all wireless devices (AP3, $UE1_3$, $UE2_3$ and $UE3_3$) and the required quality of service for each device.

The present invention is not limited to the embodiments shown, but extends also to other embodiments falling within the scope of the appended claims.

**Claims**

1. Method for selecting a communication channel from a plurality of communication channels for wireless communication between a wireless access point and at least one wireless device, comprising the steps of:

   (i) measuring the strength of signals received at the wireless access point and the at least one wireless device on each of the plurality of communication channels;
   (ii) calculating the power sensed on each of the plurality of wireless communication channels from the signal strengths sensed by the wireless access point and the at least one wireless device on each of the plurality of communication channels;
   (iii) calculating the interference on each of the plurality of communication channels from the power sensed on each of the plurality of wireless communication channels; and
   (iv) assigning the communication channel with least total interference to the wireless access point.

2. Method according to claim 1, wherein the step of measuring is repeated at regular time intervals by the wireless access point and the at least one wireless device.

**3.** Method according to claim 1, wherein the step of measuring is triggered by a separate server.

**4.** Method according to any one of claims 1-3, wherein the step of calculating the power comprises weighting each received signal strength by a parameter that represents the quality of service requirements of each respective wireless device.

**5.** Method according to any one of claims 1-4, wherein the steps of calculating and assigning are carried out by the at least one wireless access point.

**6.** Method according to any one of claims 1-4, wherein the steps of calculating and assigning are carried out by a management center, such as a Wi-Fi controller.

**7.** Method according to any one of claims 1-6, wherein the step of calculating the power comprises performing the following calculation:

$$\text{Total Power Sensed on Channel j} = \sum_{k=1}^{n} w_{k,j} * 10^{\left(\frac{\text{RSSI}_{k,j}}{10} - 3\right)} \text{ Watts}$$

where $w_{k,j}$ is the quality of service weighting factor associated with $\text{RSSI}_{k,j}$, $\text{RSSI}_{k,j}$ is the power in dBm of signal number k that was sensed on the channel j, and $n_j$ is the total number of sensed signals on channel j.

**8.** Method according to any one of claims 1-7, wherein the step of calculating the interference comprises performing the following calculation:

$$\text{Total Interference on Channel i} = \sum_{j=1}^{11} \beta_{ij} * \text{Total Power Sensed on Channel j}$$

where $\beta_{ij}$ is the overlapping channel interference factor between channels i and j and is given by

$$\beta_{ij} = \begin{cases} 1 - \left(\dfrac{\text{abs}(i-j)}{5}\right) & \text{if } \text{abs}(i-j) \leq 5 \\ 0 & \text{otherwise} \end{cases}$$

**9.** System for selecting a communication channel from a plurality of communication channels for wireless communication between a wireless access point and at least one wireless device, comprising:

(i) circuitry for measuring the strength of signals received at the wireless access point and the at least one wireless device on each of the plurality of communication channels;
(ii) a processor for calculating the power sensed on each of the plurality of wireless communication channels from the signal strengths sensed by the wireless access point and the at least one wireless device on each of the plurality of communication channels, calculating the interference on each of the plurality of communication channels from the power sensed on each of the plurality of wireless communication channels, and assigning the communication channel with least total interference to the wireless access point.

**10.** System according to claim 9, wherein the processor further comprises circuitry for weighting each received signal strength by a parameter that represents the quality of service requirements of each respective wireless device.

**11.** System according to claim 9 or 10, wherein the processor is part of the at least one wireless access point.

**12.** System according to claim 9 or 10, wherein the processor is part of a management center, such as a Wi-Fi controller.

**13.** System according to any one of claims 9-12, wherein the processor calculates the power sensed on each of the plurality of wireless communication channels by performing the following calculation:

$$\text{Total Power Sensed on Channel } j = \sum_{k=1}^{n} w_{k,j} * 10^{\left(\frac{\text{RSSI}_{k,j}}{10} - 3\right)} \text{ Watts}$$

where $w_{k,j}$ is the quality of service weighting factor associated with $\text{RSSI}_{k,j}$, $\text{RSSI}_{k,j}$ is the power in dBm of signal number k that was sensed on the channel j, and $n_j$ is the total number of sensed signals on channel j.

**14.** System according to any one of claims 9-13, wherein the processor calculates the interference on each of the plurality of communication channels by performing the following calculation:

$$\text{Total Interference on Channel } i = \sum_{j=1}^{11} \beta_{ij} * \text{Total Power Sensed on Channel } j$$

where $\beta_{ij}$ is the overlapping channel interference factor between channels i and j and is given by

$$\beta_{ij} = \begin{cases} 1 - \left(\dfrac{\text{abs}(i-j)}{5}\right) & \text{if } \text{abs}(i-j) \leq 5 \\ 0 & \text{otherwise} \end{cases}$$

**15.** A computer program product comprising computer-executable instructions for performing, when the program is run on a computer, the method according to any one of claims 1-8.

Wireless devices

```
┌─────────────────────────────┐
│     Scan the spectrum        │ ⌒ S101
└─────────────────────────────┘
              │
              ▼
```

Management center (MC)

```
┌─────────────────────────────┐        ┌──────────────────────────────┐
│    Prepare RSSI reports      │ ⌒ S102 │      Collect RSSIs and QoS     │
└─────────────────────────────┘        │   requirements from devices    │
              │                         └──────────────────────────────┘
              ▼                                      ⌇ S201
┌─────────────────────────────┐
│    Send reports to the MC    │ ⌒ S103
└─────────────────────────────┘
```

```
┌─────────────────────────────────────────┐
│      Reformulate the received reports     │ ⌒ S301
└─────────────────────────────────────────┘
                     │
                     ▼
┌─────────────────────────────────────────┐
│    Weight the RSSIs according to the      │ ⌒ S302
│    QoS requirements                       │
└─────────────────────────────────────────┘
                     │
                     ▼
┌─────────────────────────────────────────┐
│    Calculate the interfering power on     │ ⌒ S303
│    each channel                           │
└─────────────────────────────────────────┘
                     │
                     ▼
┌─────────────────────────────────────────┐
│    Select the channel with lowest         │ ⌒ S304
│    interference                           │
└─────────────────────────────────────────┘
```

## FIG. 1

FIG. 2

WLAN 3
AP 3
UE 1₃
UE 2₃
UE 3₃
S102

| Entity | Required QOS | Neighbors | Channel | RSSI (dBm) |
|---|---|---|---|---|
| | | : | : | : |
| $UE1_3$ | High | AP1 | 1 | $RSSI2_1$ |
| | | Apm | 11 | $RSSI2_m$ |
| | | : | : | : |
| $UE3_3$ | High | AP1 | 1 | $RSSI4_1$ |
| | | Apm | 11 | $RSSI4_m$ |

<u>FIG. 3</u>

**FIG. 4**

(MC)

S301

| Channel | RSSI (dBm) | Required QOS |
|---|---|---|
| 1 | $RSSI1_{1,1}$ | High |
| | $RSSI1_{2,1}$ | High |
| | $RSSI1_{3,1}$ | High |
| | $RSSI1_{4,1}$ | Low |
| | : | : |
| : | : | : |
| : | : | : |
| 11 | $RSSI1_{1,11}$ | High |
| | $RSSI1_{2,11}$ | High |
| | $RSSI1_{3,11}$ | High |
| | $RSSI1_{4,11}$ | Low |
| | : | : |

S302

| Channel | RSSI (dBm) | weight |
|---|---|---|
| 1 | $RSSI1_{1,1}$ | $W_{1,1}=\mu_1$ |
| | $RSSI1_{2,1}$ | $W_{2,1}=\mu_1$ |
| | $RSSI1_{3,1}$ | $W_{3,1}=\mu_1$ |
| | $RSSI1_{4,1}$ | $W_{4,1}=\mu_2$ |
| | : | : |
| : | : | : |
| : | : | : |
| 11 | $RSSI1_{1,11}$ | $W_{1,11}=\mu_1$ |
| | $RSSI1_{2,11}$ | $W_{2,11}=\mu_1$ |
| | $RSSI1_{3,11}$ | $W_{3,11}=\mu_1$ |
| | $RSSI1_{4,11}$ | $W_{4,11}=\mu_2$ |
| | : | : |

EP 3 018 856 A1

FIG. 5

Europäisches
Patentamt
European
Patent Office
Office européen
des brevets

**EUROPEAN SEARCH REPORT**

Application Number

EP 14 30 6793

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/292988 A1 (YUEN MICHAEL [US] ET AL) 28 December 2006 (2006-12-28) | 1-3,5,6, 9,11,12, 15 | INV. H04L5/00 H04W72/04 |
| A | * abstract * <br> * paragraph [0003] - paragraph [0005] * <br> * paragraph [0014] - paragraph [0056] * <br> ----- | 4,7,8, 10,13,14 | |
| A | US 2008/019324 A1 (MATSUMOTO AKIRA [JP] ET AL) 24 January 2008 (2008-01-24) <br> * abstract * <br> * paragraph [0025] - paragraph [0026] * <br> * paragraph [0050] - paragraph [0149] * <br> ----- | 1-15 | |

TECHNICAL FIELDS
SEARCHED (IPC)

H04L
H04W

The present search report has been drawn up for all claims

| Place of search | Date of completion of the search | Examiner |
|---|---|---|
| The Hague | 15 April 2015 | Dhibi, Youssef |

## ANNEX TO THE EUROPEAN SEARCH REPORT
## ON EUROPEAN PATENT APPLICATION NO.

EP 14 30 6793

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2015

| Patent document cited in search report | | Publication date | Patent family member(s) | | Publication date |
|---|---|---|---|---|---|
| US 2006292988 | A1 | 28-12-2006 | NONE | | |
| US 2008019324 | A1 | 24-01-2008 | JP | 5084373 B2 | 28-11-2012 |
| | | | JP | 2008042896 A | 21-02-2008 |
| | | | US | 2008019324 A1 | 24-01-2008 |

EPO FORM P0459

For more details about this annex : see Official Journal of the European Patent Office, No. 12/82